Europäisches Patentamt

European Patent Office

Office européen des brevets

(11) Publication number: **0 075 422**
A2

# EUROPEAN PATENT APPLICATION

(21) Application number: **82304771.7**

(51) Int. Cl.³: **G 01 M 11/02**, G 01 N 21/55

(22) Date of filing: **10.09.82**

(30) Priority: **17.09.81 GB 8128189**

(43) Date of publication of application: **30.03.83**
Bulletin 83/13

(84) Designated Contracting States: **AT BE CH DE FR GB IT LI LU NL SE**

(71) Applicant: **SARGROVE AUTOMATION LIMITED, Solent Road, Havant Hampshire PO9 1JH (GB)**

(72) Inventor: **Vick, Dixie Michael, "The Chestnuts" 11, Eastern Road, Havant Hampshire PO9 1JH (GB)**

(74) Representative: **Shindler, Nigel et al, BATCHELLOR, KIRK & EYLES 2 Pear Tree Court Farringdon Road, London EC1R 0DS (GB)**

(54) **Measuring performance of reflex reflectors.**

(57) A photometer for testing reflex reflectors including a photo-diode light sensor (5) and measuring circuitry for measuring light reflected from the reflector under test (4). A light source (1) is positioned adjacent one end of a fibre optic bundle (3) whose other end is directed at the reflector under test, and the reflected light is measured via another fibre optic bundle (7) which directs the light onto the photo-diode (5).

-1-

"Measuring Performance Of Reflex Reflectors"

This invention relates to apparatus for measuring the performance of reflex reflectors and retro-reflective materials. When reflex reflectors such as the well-known "corner-cube" type of reflector, are used on vehicles, they are required to reflect a high proportion of the incident light from a headlamp back to the drivers eye. In practice, it is necessary to measure the performance of retro-reflective materials at a distance of 100 feet or an optical simulation of that distance. This is because when these materials are used on vehicles or road signs the driver of the vehicle requires to see the light from the reflector when he is 100 feet away from it so that he has time to take action. It is known that the performance of the reflectors and materials is quite different when measured close up.

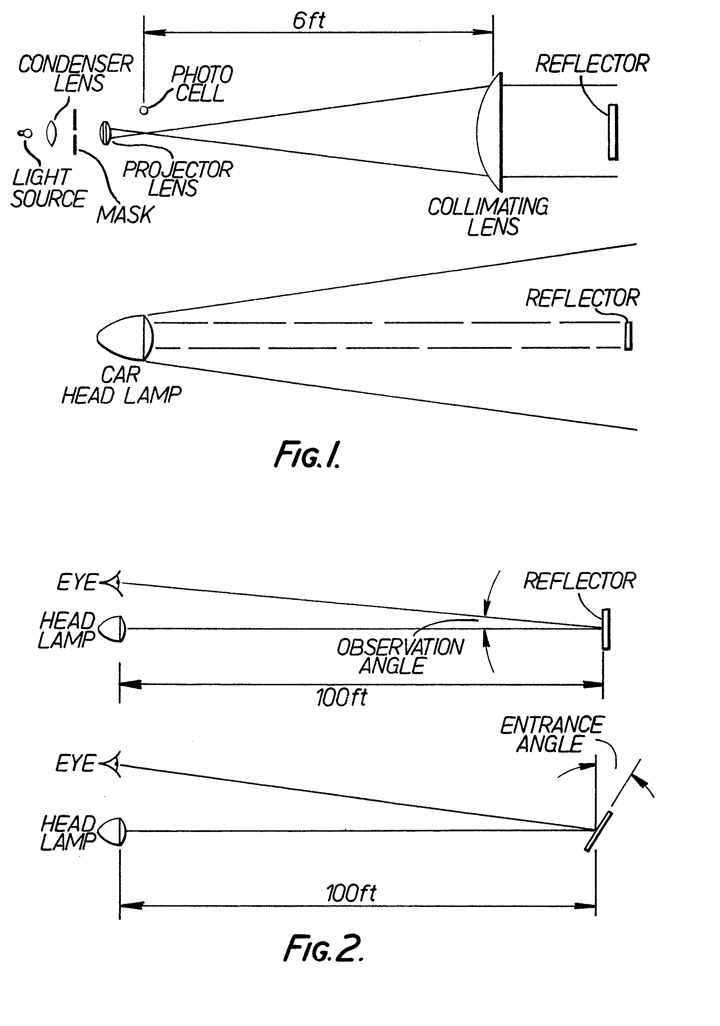

To avoid the use of a 100 feet darkroom in a conventional measuring system, collimating optics are used. In this way the light falling on the reflector under test is near parallel, which is a close simulation to the conditions which occur at 100 feet, i.e. the main part of the light from a car headlamp which falls on the reflector of the preceding car is the parallel part of the beam, as shown in Figure 1.

Currently it is required to measure the performance of these reflectors at observation angles between 0.2° and 5° and entrance angles of up to 30° in both vertical and horizontal planes as shown in Figure 2. An associated problem when measuring the performance of reflectors is to ensure that the light returned from the shiny surface of the material (1st surface reflections) is not measured.

Even with collimating optics the length of

0075422

-2-

the photometer used for making the measurements can only be reduced to some 6 feet and the equipment needs to be operated in semi or complete darkness. Therefore it is not suitable for measuring the performance of the reflective materials when they are fitted to a car or mounted on a road sign in the open. Therefore, once the materials are fitted, their performance cannot easily be checked, which means that many road signs and car reflectors being used are far below the required standard.

The present invention therefore seeks to provide a portable photometer suitable for the testing of reflex reflectors in normal daylight on site.

Accordingly the present invention provides a photometer comprising a first optical fibre or bundle of optical fibres having one end adjacent to a light source, a second optical fibre or bundle of optical fibres having one end adjacent to a light sensor, the two fibres or bundles having their other ends arranged parallel to one another and directed towards a test position; measuring circuit means connected to the sensor to measure the light reflected from the test position; and light shielding means around the test-position-ends of the fibres and adapted to co-operate with a device under test, to exclude extraneous light.

Preferably the fibres are in two bundles which are closely spaced at their test position ends; in a preferred arrangement, the ends of the fibres supplying the light are grouped around those receiving the light.

Some embodiments of the invention will now be described by way of example with reference to the accompanying drawings, in which:

-3-

Figure 1 illustrates the principle of operation of a conventional reflector testing system, as explained above;

Figure 2 is a diagram used to illustrate the measurement angles involved in testing reflectors as mentioned above;

Figure 3a is a schematic diagram of the photometer of the invention;

Figure 3b is a generalised circuit diagram of the device of Figure 3a;

Figure 4 shows one arrangement of optical fibres;

Figure 5 shows an alternative arrangement of fibres;

Figure 6 shows an overall view of a practical form of the device of Figure 3, and

Figure 7 shows a circuit diagram of the device of Figure 6.

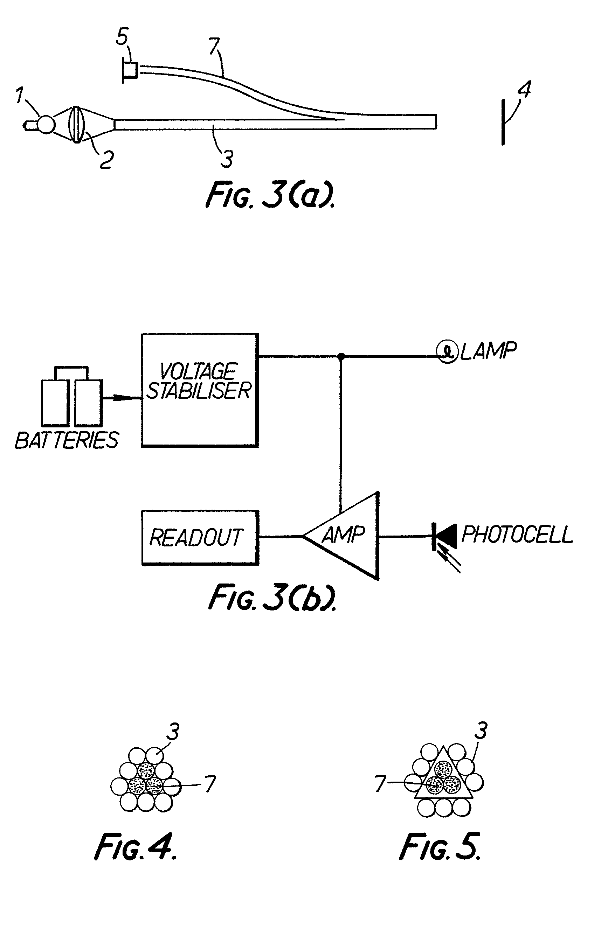

Referring to Figure 3, the light from MES bulb 1 is focused by a lens 2 on to the end of a first fibre optic bundle 3. This light is passed through the fibre optic and falls on to the reflector 4 under test. The fibre optic bundle 3 is made up of six fibres to transmit the light whose ends nearest the reflector are grouped around the ends of a second bundle 7 of three receiving fibres as shown in Figure 4.

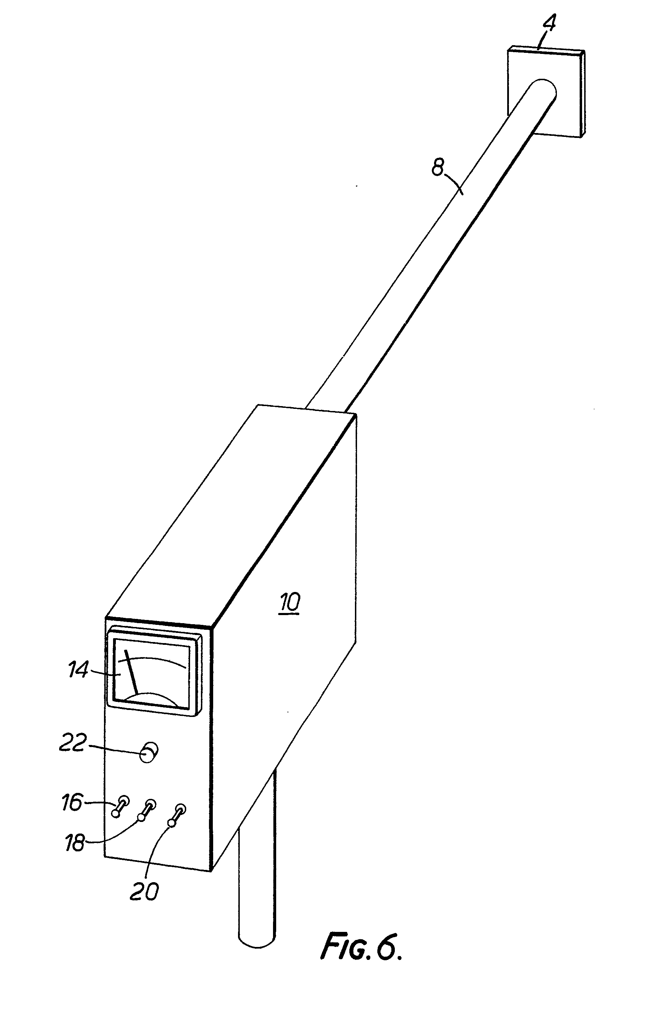

By the use of packing pieces a larger gap can be obtained between the transmitter and receiver optics and, therefore, the observation angle is increased, as shown in Figure 5. Extraneous light is excluded by means of a tube 8 around the fibres, as shown in Figure 6.

The light from the transmitter bundle of the fibre optics falls on the reflector under test 4 and the light returned from the reflector is picked up by the receiver optic where it is transmitted to the photodiode 5. The signal is amplified and displayed on a moving coil meter or digital display.

The use of fibre optics allows the transmitter and receiver to be mounted very close together which allows for small observation angles at short distances. This cannot be arranged normally because of the physical size of the light source and photocell. Also the light transmitted from the end of the fibre at close range is near parallel and this gives the desired measuring technique of parallel light and small observation angles but at close range instead of many feet. Also as light cannot enter the fibres from the side, the equipment can be used in daylight conditions.

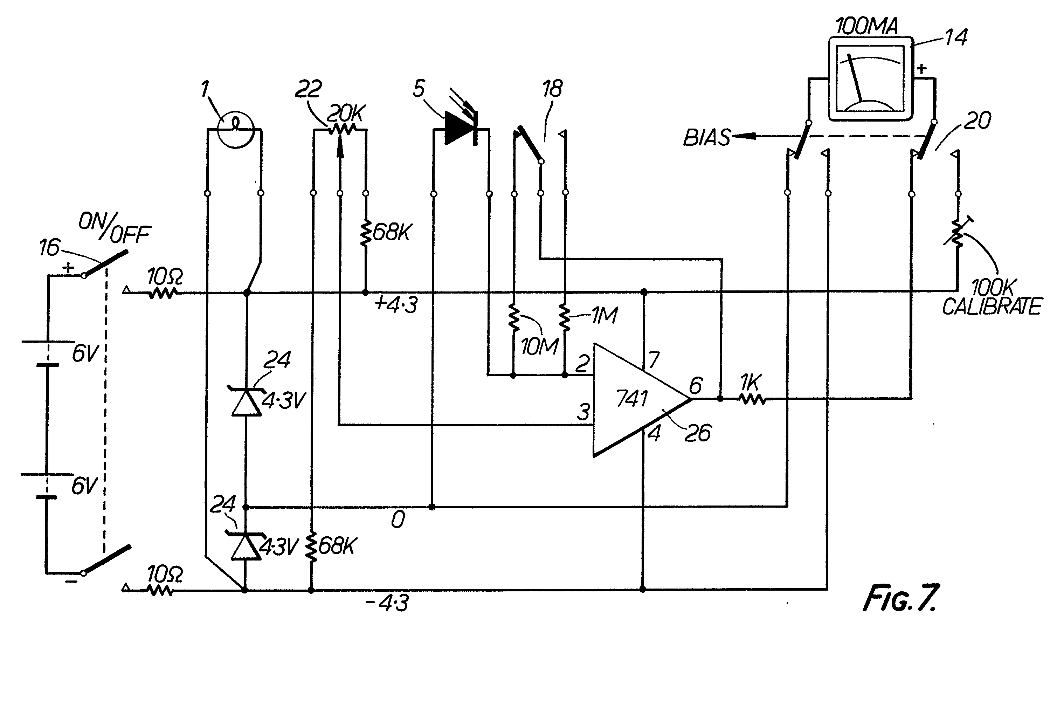

As shown in Figures 6 and 7, a practical form of the instrument comprises a body 10 incorporating the measuring circuit and batteries and a measuring tube 8 which encloses the optical fibres and whose end 12 is positioned closely against a reflector 4 under test, in use. The measuring tube 8 may be made telescopic so as to allow the distance between the optics and the reflector under test, to be altered so as to control the maximum observation angle. In addition a central masking disc may be provided at the end of the tube to limit the minimum observation angle. Thus, as the telescopic tube is extended or retracted, the minimum angle of observation between the fibres and the reflector under test can be varied to suit the material being tested. This is necessary because some reflective materials have very different characteristics when measured in the "head-on" position (i.e. at an observation angle of 0°) to their characteristics when measured slightly off axis. Since the occurrence of exactly 0° observation angles is very unusual in actual use of the device, it is thus necessary to block the central area from measurement to obtain an accurate estimate of the effective performance of the material. A meter 14 indicates the amount of reflected light and the device is additionally provided with an on/off switch 16, range switch 18, battery check switch 20, and "set-zero" potentiometer knob 22. The circuitry of the device is shown in more detail in Figure 7. The power from two 6 volt batteries is fed through an "On/Off" switch to a pair of zener diodes 24 which stabilise the voltage to 8.6 volts.

A "Battery Check" switch allows the meter to monitor this voltage and the instrument should not be used when this falls below 8.5 volts. The illumination lamp 1 is fed from this stabilised voltage. The centre tap provided by the zener diodes gives a $\pm$ 4.3 voltage supply which is used to power an operational amplifier 26. The gain of the operational amplifier can be preset to give more than one range to the instrument. The photo diode is coupled to one input of the operational amplifier and the other input terminal of the operational amplifier is fed from a potential divider chain to allow the instrument to be zeroed. The output of the operational amplifier is fed to a moving coil meter 1 via the "Battery Check" switch 20.

In order to calibrate the device, it is supplied with a "standard" having a reflector of known performance on one side and a matt black (i.e. non-reflective) surface on the other. The operation of the instrument is as follows:

1.      Switch on.

2.      Operate the "Check Battery" switch. Meter reading obtained to be better than 8.5V.

3.      Place back of Standard, i.e. black side, at the end of the measuring tube.

4.      Zero meter.

5.      Reverse Standard and observe reading.

6.      Put end of measuring tube to reflector to be tested.  Check that the reading is as good as or better than the Standard.

.7.      Switch off.

        The reflector or reflective material under test can be measured at other entrance angles by fitting an adaptor which presents the Photometer at the required angle to the material under test.

        It can be demonstrated that the equipment does not measure first surface reflections by placing a mirror over the end of the measuring tube and observing that the instrument does not give a reading.  Diffuse light from the surface of such materials as paper is not measured either.

CLAIMS

1.      A photometer for testing reflex reflectors and including light sensing means and measuring ciruitry for measuring the light reflected from a reflector, characterised in that the photometer also includes a light source (1, 2) and a first optical fibre or bundle of optical fibres (3) having one end adjacent the said light source, a second optical fibre or bundle of optical fibres (7) having one end adjacent to the light sensor (5) the two fibres or bundles having their other ends arranged parallel to one another and directed towards a test position (4) where the reflector under test is positioned, in use, and light shielding means (8) around the test position ends of the fibres and adapted to cooperate with the refletor under test to exclude extraneous light.

2.      A photometer according to claim 1 further characterised in that the fibres are arranged in two bundles which are closely spaced at their test position ends.

3.      A photometer according to claim 2 further characterised in that the test portion ends of the fibres (3) supplying the light are grouped around the corresponding ends (7) of those receiving the light.

4.      A photometer according to any preceding claim, further characterised in that the light shielding means comprises an elongated tube.

5. A photometer according to claim 4 in which the said elongated tube is telescopic, whereby, in use, the maximum observation angle may be adjusted by adjusting the distance between the said second ends of the optical fibres and the reflector under test.

6. A photometer according to claim 5 further comprising a central disc mounted in the outer end of the telescopic tube so as to limit the minimum observation angle as between the said second ends of the optical fibres and the reflector under test.

7. A photometer according to claim 1 in which the measuring circuitry includes an operational amplifier having first and second inputs, and the light sensor comprises a photo-diode connected to one input of the amplifier, the said one input also having a feedback circuit connected thereto, a potential divider being connected to the other said input.

0075422

**FIG. 1.**

6ft

CONDENSER LENS

PHOTO CELL

REFLECTOR

LIGHT SOURCE

PROJECTOR LENS

MASK

COLLIMATING LENS

CAR HEAD LAMP

REFLECTOR

*Fig. 1.*

EYE

HEAD LAMP

REFLECTOR

OBSERVATION ANGLE

100 ft

EYE

HEAD LAMP

ENTRANCE ANGLE

100 ft

*Fig. 2.*

FIG. 3(a).

VOLTAGE STABILISER

BATTERIES

READOUT

AMP

LAMP

PHOTOCELL

FIG. 3(b).

FIG. 4.

FIG. 5.

FIG.6.

Fig. 7.

00754422